# FASCICULE DE BREVET EUROPEEN

(11) **EP 3 751 207 B1**
(45) Date de publication et mention de la délivrance du brevet: **23.03.2022**
(21) Numéro de dépôt: 20179303.1
(22) Date de dépôt: 10.06.2020
(51) Int. Cl.: F24F 5/00, F24F 3/147, F24F 3/14, F24F 12/00

(54) **CENTRALE DE TRAITEMENT D AIR DOUBLE FLUX ET À DESSICATION ADAPTÉE AUX BÂTIMENTS D ACTIVITÉ AQUATIQUE**
LUFTAUFBEREITUNGSSYSTEM MIT DOPPELSTRÖMUNG UND ANGEMESSENER TROCKNUNG FÜR GEBÄUDE MIT WASSERAKTIVITÄTEN
DOUBLE-FLOW AIR PROCESSING AND DESSICATION UNIT SUITABLE FOR WATERCRAFT ACTIVITY BUILDINGS

(30) Priorité: 12.06.2019 FR 1906214
(43) Date de publication de la demande: 16.12.2020
(73) Titulaire: Sustain'air, 06410 Biot (FR)
(72) Inventeur: LAMOUCHE, Thierry, 06560 VALBONNE (FR)
(74) Mandataire: Germain Maureau

(56) Documents cités:
- EP-A1- 2 787 294
- EP-A1- 3 450 862
- EP-A1- 3 492 823
- WO-A1-01/71260
- FR-A1- 3 042 856
- US-A1- 2017 356 661

## Description

L'invention se rapporte à une centrale de traitement d'air double flux pour la régulation thermique et le renouvellement d'air d'au moins une zone à traiter. Elle se rapporte plus particulièrement à une centrale de traitement d'air à dessication.

La présente invention trouve une application favorite, et non limitative, dans le traitement d'air d'un bâtiment d'activité aquatique, tel qu'une piscine couverte, et de manière générale dans le traitement d'air d'un bâtiment ayant un besoin de régulation en température (par exemple dans une plage de température entre 10 et 40 °C) et en humidité (par exemple dans une plage d'humidité absolue entre 4 et 20 g/kg).

L'invention s'applique notamment, à titre non limitatif, au traitement d'air d'un bâtiment ayant un besoin de régulation en humidité pour des ambiances nécessitant une humidification constante avec une humidité absolue supérieure à 10 g/kg, et notamment comprise entre 10 et 20 g/kg.

Dans le secteur des piscines couvertes, il est connu d'employer des centrales de traitement d'air qui utilisent l'air vicié prélevé dans la piscine couverte en le réinjectant mélangé avec de l'air neuf prélevé à l'extérieur, où l'air recyclé et réinjecté est déshumidifié au moyen d'une pompe à chaleur.

Ces centrales de traitement d'air restent tout de même très énergivores, du fait de l'emploi d'une pompe à chaleur et du fait de l'utilisation quasi systématique de froid pour gérer les problèmes d'humidité, et présentent en plus l'inconvénient de concentrer les polluants présents dans l'air vicié (en particulier les chloramines) pour les réinjecter dans l'air neuf.

L'état de la technique peut également être illustré par l'enseignement de la demande de brevet EP 2 787 294 A1 qui divulgue une centrale de traitement d'air à dessication comprenant une roue dessicante et une roue de récupération interposées sur deux voies de circulation d'air. Bien que performante en mode de refroidissement, une telle centrale de traitement d'air à dessication ne s'avère cependant pas assez performante dans un mode de chauffage (autrement dit en saison froide telle qu'en hiver) pour souffler un air chaud et ayant une humidification élevée. En effet, en saison froide, l'air neuf est généralement froid et sec, de sorte qu'il est nécessaire que la centrale de traitement d'air procure un chauffage suffisant et aussi une humidification suffisante, ce qui est difficile pour cette centrale de traitement d'air à dessication où la récupération en température effectuée dans la roue de récupération n'est pas suffisante pour à la fois procurer le chauffage et l'humidification souhaités.

La présente invention a pour but de résoudre en tout ou partie les inconvénients précités, en proposant une centrale de traitement d'air à dessication qui est adaptée dans un mode de chauffage pour souffler un air chaud et ayant une humidification constante avec une humidité absolue supérieure à 10 g/kg, et notamment comprise entre 10 et 20 g/kg, tout en limitant la consommation énergétique.

Un autre but de l'invention est de proposer une centrale de traitement d'air qui évite, ou du moins limite, une réinjection d'air vicié chargé en polluants pour justement éviter, ou du moins limiter, la concentration de polluants dans l'air neuf soufflé.

Un autre but de l'invention est de proposer une centrale de traitement d'air qui répond aux exigences et aux besoins pour le traitement d'air d'une piscine couverte, et de manière générale d'un bâtiment ayant un besoin de régulation en température et en humidité pour des ambiances nécessitant une humidification élevée.

Un autre but de l'invention est de proposer une centrale de traitement d'air qui présente un risque réduit face au gel, autrement dit un risque réduit de voir un de ses composants geler sous l'effet de températures négatives de l'air extérieur.

A cette fin, l'invention propose une centrale de traitement d'air double flux pour la régulation thermique et le renouvellement d'air d'au moins une zone à traiter, cette centrale de traitement d'air double flux étant une centrale de traitement d'air à dessication qui comporte au moins :
- deux voies de circulation d'air entre la zone et l'extérieur, comprenant une voie de reprise et une voie de soufflage ;
- un ventilateur de reprise placé sur la voie de reprise pour prélever un air vicié dans la zone et le rejeter vers l'extérieur ;
- un ventilateur de soufflage placé sur la voie de soufflage pour aspirer un air neuf à l'extérieur et le souffler dans la zone;
- une roue dessicante interposée sur les deux voies de circulation d'air;
- un échangeur thermique de récupération interposé sur les deux voies de circulation d'air et procurant un échange calorifique entre l'air vicié prélevé dans la zone et l'air neuf aspiré à l'extérieur ;
- une batterie chauffante de régénération placée sur la voie de reprise en amont de la roue dessicante et en aval de l'échangeur thermique de récupération, et procurant un chauffage de l'air vicié pour une régénération de la roue dessicante ;
- un humidificateur de soufflage placé sur la voie de soufflage en aval de l'échangeur thermique de récupération ;
- une batterie chauffante de chauffage placée sur la voie de soufflage en aval de l'échangeur thermique de récupération ;
- un générateur thermique en liaison avec la batterie chauffante de régénération et avec la batterie chauffante de chauffage ;
où cette centrale de traitement d'air double flux selon l'invention comprend en outre un échangeur thermique enthalpique interposé sur les deux voies de circulation d'air entre la roue dessicante et la batterie chauffante de régénération, de sorte que la batterie chauffante de régénération et l'échangeur thermique de récupération sont en amont de l'échangeur thermique enthalpique sur la voie de reprise, cet échangeur thermique enthalpique procurant un échange calorifique et d'humidité entre l'air vicié prélevé dans la zone et l'air neuf soufflé dans la zone.

Ainsi, grâce à l'invention, avec l'ajout de l'échangeur thermique enthalpique, en aval de la roue dessicante sur la voie de soufflage, l'humidification de l'air neuf se fait principalement par récupération d'humidité sur l'air vicié dans cet échangeur thermique enthalpique. Cette récupération performante va permettre de réduire fortement voire de supprimer les besoins d'humidification par l'humidificateur de soufflage en mode de chauffage ; cet humidificateur de soufflage étant en aval de cet échangeur thermique enthalpique sur la voie de soufflage.

Par ailleurs, une telle centrale de traitement d'air permet d'injecter un air neuf dans la zone, sans réinjecter un air vicié prélevé dans cette zone, ce qui permet d'éviter, ou du moins limiter, la concentration de polluants dans l'air neuf soufflé.

Dans un mode de chauffage, l'échangeur thermique de récupération et l'échangeur thermique enthalpique sont activés de sorte que la centrale de traitement d'air procure une récupération de chaleur issue de l'air vicié majoritairement par l'échangeur thermique de récupération, et une récupération d'humidité issue de l'air vicié par l'échangeur thermique enthalpique.

En outre, le fait de positionner l'échangeur thermique enthalpique en amont de la batterie chauffante de régénération sur la voie de reprise, permet d'éviter de geler cette batterie chauffante de régénération.

En effet, dans le cas d'une absence de l'échangeur thermique enthalpique, et dans le cas d'une température extérieure négative, et en particulier en période de grand froid avec une température extérieure en-dessous de -15°C, une grande partie de l'énergie est récupérée par l'échangeur thermique de récupération sur l'air vicié (air extrait de la zone) de sorte que l'air vicié en sortie de cet échangeur thermique de récupération sur la voie de reprise peut être à une température négative, ce qui provoque le gel de la batterie chauffante de régénération. Dans le cadre de l'invention, la présence de l'échangeur thermique enthalpique provoque une élévation de la température en sortie d'échangeur thermique enthalpique, sur la voie de soufflage, de telle sorte que la température de l'air neuf sur la voie de soufflage entrant dans l'échangeur thermique de récupération est toujours positive ce qui permet que, par échange calorifique dans l'échangeur thermique de récupération, la température de l'air en sortie de l'échangeur thermique de récupération, sur la voie de reprise, est toujours positive. Dans ce cas, il n'y a aucun risque de geler la batterie chauffante de régénération à cause d'une température négative de cet air vicié en sortie de cet échangeur thermique de récupération.

Selon une caractéristique, dans un mode de rafraîchissement pour un abaissement de la température et/ou de l'humidité dans la zone :
- la roue dessicante est activée pour procurer une déshumidification et un chauffage de l'air neuf entrant dans la voie de soufflage et, en parallèle, une humidification et un refroidissement de l'air vicié sortant de la voie de reprise ;
- l'échangeur thermique enthalpique est inactivé et/ou est bipassé sur les deux voies ;
- l'échangeur thermique de récupération est activé pour refroidir l'air neuf en sortie de la roue dessicante et réchauffer l'air vicié entrant dans la voie de reprise ;
- la batterie chauffante de chauffage est inactive ;
- l'humidificateur de soufflage procure un refroidissement de l'air neuf en sortie de l'échangeur thermique de récupération et un ajustement du niveau d'humidité de l'air soufflé dans la zone ;
- la batterie chauffante de régénération est activée pour réchauffer l'air vicié sortant de l'échangeur thermique de récupération pour une régénération de la roue dessicante.

Selon une autre caractéristique, dans un mode de chauffage pour une augmentation de la température et/ou de l'humidité dans la zone :
- la roue dessicante est désactivée et/ou est bipassée sur les deux voies ;
- l'échangeur thermique enthalpique est activé pour humidifier l'air neuf entrant dans la voie de soufflage par récupération de l'humidité présente dans l'air vicié prélevé dans la zone ;
- l'échangeur thermique de récupération est activé pour réchauffer l'air neuf sortant de l'échangeur thermique enthalpique et refroidir l'air vicié entrant dans l'échangeur thermique enthalpique ;
- la batterie chauffante de chauffage est activée ;
- la batterie chauffante de régénération est inactivée ; et
- l'humidificateur de soufflage procure une humidification de l'air neuf en sortie de l'échangeur thermique de récupération si nécessaire.

Selon une possibilité, la centrale de traitement d'air double flux comprend en outre un humidificateur de reprise placé sur la voie de reprise en amont de l'échangeur thermique de récupération.

Selon une autre possibilité, l'échangeur thermique enthalpique est du type rotatif.

Dans une réalisation particulière, la batterie chauffante de chauffage est placée sur la voie de soufflage en aval de l'échangeur thermique de récupération et en amont de l'humidificateur de soufflage.

Dans un mode de réalisation particulier, l'échangeur thermique de récupération est choisi parmi une roue de récupération, un échangeur à courant croisé, un échangeur à contre-courant, et un échangeur à plaques à contre-courant.

L'invention se rapporte également à un procédé de traitement d'air pour la régulation thermique et le renouvellement d'air d'au moins une zone à traiter, ledit procédé consistant à piloter une centrale conforme à l'invention selon au moins deux modes de fonctionnement :
(a) un mode de rafraîchissement pour un abaissement de la température et/ou de l'humidité dans la zone, dans lequel :
   - la roue dessicante est activée pour procurer une déshumidification et un chauffage de l'air neuf entrant dans la voie de soufflage et, en parallèle, une humidification et un refroidissement de l'air vicié sortant de la voie de reprise ;
   - l'échangeur thermique enthalpique est inactivé et/ou est bipassé sur les deux voies ;
   - l'échangeur thermique de récupération est activé pour refroidir l'air neuf en sortie de la roue dessicante et réchauffer l'air vicié entrant dans la voie de reprise ;
   - la batterie chauffante de chauffage est inactive ;
   - l'humidificateur de soufflage procure un refroidissement de l'air neuf en sortie de l'échangeur thermique de récupération et un ajustement du niveau d'humidité de l'air soufflé dans la zone ;
   - la batterie chauffante de régénération est activée pour réchauffer l'air vicié sortant de l'échangeur thermique de récupération pour une régénération de la roue dessicante ;
(b) un mode de chauffage pour une augmentation de la température et/ou de l'humidité dans la zone, dans lequel :
   - la roue dessicante est désactivée ;
   - l'échangeur thermique enthalpique est activé pour humidifier l'air neuf entrant dans la voie de soufflage par récupération de l'humidité présente dans l'air vicié prélevé dans la zone ;
   - l'échangeur thermique de récupération est activé pour réchauffer l'air neuf sortant de l'échangeur thermique enthalpique et refroidir l'air vicié entrant dans l'échangeur thermique enthalpique ;
   - la batterie chauffante de chauffage est activée ;
   - la batterie chauffante de régénération est inactivée ; et
   - l'humidificateur de soufflage procure une humidification de l'air neuf en sortie de l'échangeur thermique de récupération si nécessaire.

D'autres caractéristiques et avantages de la présente invention apparaîtront à la lecture de la description détaillée ci-après, d'un exemple de mise en œuvre non limitatif, faite en référence à la figure annexée dans laquelle :

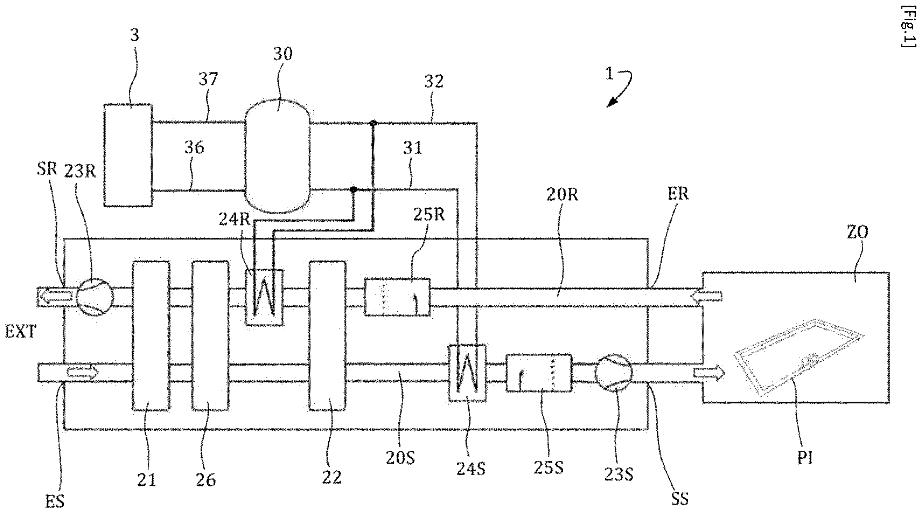

[Fig.1] est une vue schématique d'une centrale de traitement d'air double flux selon un mode de réalisation de l'invention.

En référence à la figure, une centrale de traitement d'air double flux 1 selon l'invention est prévue pour la régulation thermique et le renouvellement d'air d'au moins une zone ZO à traiter, tel qu'un bâtiment d'activité aquatique accueillant une piscine PI couverte ou intérieure et nécessitant une humidification constante avec une humidité absolue comprise entre 10 et 20 g/kg

Il est à noter que le bâtiment abritant la piscine PI peut être avec:
- un toit fixe, et alors on dit que la piscine est une piscine couverte non découvrable ; ou
- avec un toit découvrable (au moins partiellement), et alors ont dit que la piscine est une piscine couverte découvrable, comme par exemple les piscines appelées « Tournesol », « Plein Ciel », « Plein Soleil » ou « Iris ».

Cette centrale de traitement d'air double flux 1 comprend deux voies parallèles de circulation d'air entre la zone ZO et l'extérieur EXT, à savoir :
- une voie de reprise 20R pour la circulation de l'air de la zone ZO vers l'extérieur EXT ; et
- une voie de soufflage 20S pour la circulation de l'air de l'extérieur EXT vers la zone ZO.

Pour la suite de la description, les notions « amont », « aval », « entrée » et « sortie » se réfèrent systématiquement au sens de circulation de l'air dans la voie concernée ou dans l'élément concerné. Ainsi, l'entrée ES de la voie de soufflage 20S se situe du côté de l'extérieur EXT, tandis que sa sortie SS se situe du côté de la zone ZO. A l'inverse, l'entrée ER de la voie de reprise 20R se situe du côté de la zone ZO, tandis que sa sortie SR se situe du côté de l'extérieur EXT. Un premier élément est disposé en amont d'un second élément sur une voie, lorsque ce premier élément est situé plus près de l'entrée de la voie que le second élément. A l'inverse, un premier élément est disposé en aval d'un second élément sur une voie, lorsque ce premier élément est situé plus près de la sortie de la voie que le second élément.

La centrale de traitement d'air double flux 1 comprend successivement les éléments suivants interposés sur les deux voies de reprise et de soufflage 20R, 20S respectivement, en partant de l'extérieur EXT en direction de la zone ZO :
- une roue dessicante 21 ;
- un échangeur thermique enthalpique 26, notamment du type échangeur rotatif; et
- un échangeur thermique de récupération 22, notamment du type roue de récupération.

La roue dessicante 21 intègre un système de mise en marche/arrêt, tel qu'un système motorisé, afin de pouvoir piloter à distance sa mise en marche/arrêt. De même, l'échangeur thermique de récupération 22 intègre un système de mise en marche/arrêt, tel qu'un système motorisé, afin de pouvoir piloter à distance sa mise en marche/arrêt. De même, l'échangeur thermique enthalpique 26 intègre un système de mise en marche/arrêt, tel qu'un système motorisé, afin de pouvoir piloter à distance sa mise en marche/arrêt.

La centrale de traitement d'air double flux 1 comporte également, sur sa voie de reprise 20R, de son entrée ER jusqu'à sa sortie SR, les éléments suivants :
- un humidificateur de reprise 25R (en option) placé en amont de l'échangeur thermique de récupération 22 ;
- une batterie chauffante de régénération 24R placée entre l'échangeur thermique de récupération 22 et l'échangeur thermique enthalpique 26, autrement dit en amont de l'échangeur thermique enthalpique 26 et en aval de l'échangeur thermique de récupération 22 ; et
- un ventilateur de reprise 23R placé en aval de la roue dessicante 21, pour rejeter l'air de reprise aspiré dans la zone ZO vers l'extérieur EXT.

Le ventilateur de reprise 23R peut cependant être placé ailleurs sur la voie de reprise 20R, par exemple en amont de l'humidificateur de reprise 25R.

L'humidificateur de reprise 25R est alimenté en eau par une canalisation d'eau (non visible) branchée sur un réseau d'eau (eg. le réseau du bâtiment), et sur laquelle est placée une pompe de mise en circulation de l'eau. Il est également avantageux de prévoir, sur cette canalisation d'eau, un dispositif de traitement d'eau, allant d'un simple filtre jusqu'à un dispositif à osmose inverse, dont la technologie dépendra de la qualité de l'eau (dureté, pH, etc.).

En outre, au moins un filtre peut être placé sur la voie de reprise 20R, de préférence en amont de l'humidificateur de reprise 25R, pour filtrer l'air extrait de la zone ZO avant d'entrer dans les composants de la centrale de traitement d'air double flux 1.

De plus, l'échangeur thermique enthalpique 26 peut être couplé à :
- un bipasse de reprise (aussi appelé by-pass) sur la voie de reprise 20R pour le court-circuiter sur la voie de reprise 20R ; et
- un bipasse de soufflage sur la voie de soufflage 20S pour le court-circuiter sur la voie de soufflage 20S ;
afin d'éviter les pertes de charge lorsque l'échangeur thermique enthalpique 26 ne fonctionne pas ou est désactivé.

De même, la roue dessicante 21 peut être couplée à :
- un bipasse de reprise (aussi appelé by-pass) sur la voie de reprise 20R pour la court-circuiter sur la voie de reprise 20R et
- un bipasse de soufflage sur la voie de soufflage 20S pour la court-circuiter sur la voie de soufflage 20S ;
afin d'éviter les pertes de charge lorsque la roue dessicante 21 ne fonctionne pas ou est désactivée.

Dans l'exemple de la Figure 1, ces bipasses de reprise et de soufflage ne sont pas illustrés, à des fins de clarté de la Figure 1.

La centrale de traitement d'air double flux 1 comporte également, sur sa voie de soufflage 20S, de son entrée ES jusqu'à sa sortie SS, les éléments suivants :
- une batterie chauffante de chauffage 24S placée en aval de l'échangeur thermique de récupération 22 ;
- un humidificateur de soufflage 25S placé en aval de la batterie chauffante de chauffage 24S ; et
- un ventilateur de soufflage 23S placé en aval de l'humidificateur de soufflage 25S, pour souffler l'air neuf prélevé à l'extérieur EXT dans la zone ZO.

Le ventilateur de soufflage 23S peut cependant être placé ailleurs sur la voie de soufflage 20S, par exemple en amont de la batterie chauffante de chauffage 24S ou en amont de l'humidificateur de soufflage 25S.

L'humidificateur de soufflage 23S est alimenté en eau par une canalisation d'eau (non visible) branchée sur un réseau d'eau (eg. le réseau du bâtiment), et sur laquelle est placée une pompe de mise en circulation de l'eau. Il est également avantageux de prévoir, sur cette canalisation d'eau, un dispositif de traitement d'eau.

En outre, au moins un filtre peut être placé sur la voie de soufflage 20S, de préférence en amont de la roue dessicante 21, pourfiltrer l'air neuf prélevé à l'extérieur EXT avant d'entrer dans les composants de la centrale de traitement d'air double flux 1.

Il est également envisageable de disposer une batterie de préchauffage thermique ou électrique, disposée sur la voie de soufflage 20S en amont de la roue dessicante 21, afin de préchauffer l'air neuf avant de passer dans la roue dessicante 21.

Il est également prévu un générateur thermique 3 en liaison avec les batteries chauffantes 24R, 24S via un ballon tampon 30 ; un tel ballon tampon 30 étant optionnel, en fonction des caractéristiques du générateur thermique 3. Le générateur thermique 3 constitue une source de chaleur, de préférence du type durable comme par exemple des capteurs solaires, un dispositif de chauffage au bois, une unité biogaz, une unité d'incinération d'ordures ménagères, un dispositif de cogénération, une chaudière à condensation, un système de récupération de chaleur perdue, etc. ou la combinaison de plusieurs sources de chaleur distinctes.

Le ballon tampon 30 présente une canalisation chaude 31 et une canalisation froide 32, pour la circulation d'un fluide caloporteur respectivement réchauffé et refroidi. Ces voies 31, 32 sont raccordées aux batteries 24R, 24S pour réaliser le chauffage de l'air circulant à travers ces batteries 24R, 24S ; ces batteries 24R, 24S formant des échangeurs de chaleur entre la source chaude (le fluide caloporteur chaud provenant de la canalisation chaude 31) et l'air traversant les batteries 24R, 24S, le fluide caloporteur refroidi retournant au ballon tampon via la canalisation froide 32.

Dans ces voies 31, 32, entre le ballon tampon 30 et les batteries 24R, 24S, le fluide caloporteur est par exemple de l'eau sans traitement antigel particulier, dans la mesure où ces voies seront de préférence disposées à l'intérieur d'un bâtiment. Par contre, dans les voies chaude 36 et froide 37 entre le ballon tampon 30 et le générateur thermique 3, le fluide est de préférence de l'eau complété d'un traitement antigel (par exemple de l'eau avec du glycol) car le générateur thermique 3 et ces voies 36, 37 sont généralement localisées à l'extérieur du bâtiment, et donc exposées au gel.

Plus précisément, la canalisation chaude 31 est reliée à une entrée de la batterie chauffante de régénération 24R pour le fluide caloporteur, et une pompe est placée sur cette canalisation chaude 31 en amont de cette batterie 24R pour la mise en circulation du fluide caloporteur. La canalisation froide 32 est reliée à une sortie de la batterie chauffante de régénération 24R pour le retour du fluide caloporteur dans le ballon tampon 30.

De même, la canalisation chaude 31 est reliée à une entrée de la batterie chauffante de chauffage 24S pour le fluide caloporteur, et une pompe est placée sur cette canalisation chaude 31 en amont de cette batterie chauffante de chauffage 24S pour la mise en circulation du fluide caloporteur. La canalisation froide 32 est reliée à une sortie de la batterie chauffante de chauffage 24S pour le retour du fluide caloporteur dans le ballon tampon 30.

La centrale de traitement d'air double flux 1 comprend également quatre systèmes de régulation de température.

Un premier système de régulation de température est prévu pour la régulation de la température en sortie de la batterie chauffante de régénération 24R, et il comporte :
- une sonde de température placée sur la voie de reprise 20R en sortie de la batterie chauffante de régénération 24R ;
- une vanne motorisée à trois voies placée sur la canalisation froide 32, avec une première voie à débit variable placée sur une dérivation entre la canalisation chaude 31 et la canalisation froide 32 en aval de la pompe, une deuxième voie à débit variable placée sur la canalisation froide 32 en amont et une troisième voie placée sur la canalisation froide 32 en aval ; et
- un organe de contrôle (ou régulateur) qui est relié à la sonde de température et qui pilote la vanne motorisée en fonction de la température en sortie de la batterie chauffante 24R.

L'organe de contrôle effectue une régulation en boucle fermée, notamment du type PID pour « proportionnel intégral dérivé », de la température en sortie de la batterie chauffante de régénération 24R, en contrôlant les débits dans les première et deuxième voies de la vanne motorisée.

Un deuxième système de régulation de température est prévu pour la régulation de la température en sortie de la batterie chauffante de chauffage 24S, et il comporte :
- une sonde de température placée sur la voie de soufflage 20S en sortie de la batterie chauffante de chauffage 24S ;
- une vanne motorisée à trois voies placée sur la canalisation froide 32, avec une première voie à débit variable placée sur une dérivation entre la canalisation chaude 31 et la canalisation froide 32 en aval de la pompe, une deuxième voie à débit variable placée sur la canalisation froide 32 en amont et une troisième voie placée sur la canalisation froide 32 en aval ; et
- un organe de contrôle (ou régulateur) qui est relié à la sonde de température et qui pilote la vanne motorisée en fonction de la température en sortie de la batterie chauffante de chauffage 24S.

L'organe de contrôle effectue une régulation en boucle fermée, notamment du type PID, de la température en sortie de la batterie chauffante de chauffage 24S, en contrôlant les débits dans les première et deuxième voies de la vanne motorisée.

Un troisième système de régulation de température est prévu pour la régulation de la température en sortie de l'humidificateur de reprise 25R, et il comporte :
- une sonde de température placée sur la voie de reprise 20R en sortie de l'humidificateur de reprise 25R ;
- une vanne motorisée à deux voies placée sur la canalisation d'eau en aval de la pompe ;
- un organe de contrôle (ou régulateur) qui est relié à la sonde de température et qui pilote la vanne motorisée en fonction de la température en sortie de l'humidificateur de reprise 25R.

L'organe de contrôle effectue une régulation en boucle fermée, notamment du type PID, de la température en sortie de l'humidificateur de reprise 25R, en contrôlant le débit dans les voies de la vanne motorisée.

Un quatrième système de régulation de température est prévu pour la régulation de la température en sortie de l'humidificateur de soufflage 25S, et il comprend :
- une sonde de température placée sur la voie de soufflage 20S en sortie de l'humidificateur de soufflage 25S ;
- une vanne motorisée à deux voies placée sur la canalisation d'eau en aval de la pompe ;
- un organe de contrôle (ou régulateur) qui est relié à la sonde de température et qui pilote la vanne motorisée en fonction de la température en sortie de l'humidificateur de soufflage 25S.

L'organe de contrôle effectue une régulation en boucle fermée, notamment du type PID, de la température en sortie de l'humidificateur de soufflage 25S, en contrôlant le débit dans les voies de la vanne motorisée.

La centrale de traitement d'air double flux 1 comprend une unité de pilotage qui assure le pilotage d'une partie des éléments de la centrale de traitement d'air double flux 1 décrits ci-dessus pour mettre en œuvre le procédé de traitement d'air conforme à l'invention pour la régulation thermique et le renouvellement d'air de la zone ZO.

Pour cela, cette unité de pilotage est reliée :
- aux ventilateurs de reprise et de soufflage 23R, 23S pour contrôler leurs débits respectifs de ventilation, et d'assurer un équilibrage aéraulique ;
- à la roue dessicante 21 pour commander sa mise en marche/arrêt, et plus spécifiquement reliée à son système de mise en marche/arrêt ;
- à l'échangeur thermique de récupération 22 pour commander sa mise en marche/arrêt, et plus spécifiquement reliée à son système de mise en marche/arrêt ;
- à l'échangeur thermique enthalpique 26 pour commander sa mise en marche/arrêt, et plus spécifiquement reliée à son système de mise en marche/arrêt ;
- à l'humidificateur de soufflage 25S ;
- aux systèmes de régulation de température pour contrôler les températures de sortie correspondantes ;
- éventuellement à la batterie de préchauffage (lorsque présente) ;
- éventuellement à l'humidificateur de reprise 25R (lorsque présent).

L'unité de pilotage est prévue pour au moins deux modes de fonctionnement qui sont :
- un mode de rafraîchissement pour un abaissement de la température et/ou de l'humidité dans la zone ZO ; et
- un mode de chauffage pour une augmentation de la température et/ou de l'humidité dans la zone ZO.

Dans le mode de rafraîchissement, l'unité de pilotage met en œuvre le pilotage suivant :
- la roue dessicante 21 est activée pour procurer une déshumidification et un chauffage de l'air neuf entrant dans la voie de soufflage 20S et, en parallèle, une humidification et un refroidissement de l'air vicié sortant de la voie de reprise 20R ;
- l'échangeurthermique enthalpique 26 est inactivé et/ou est bipassé sur les deux voies 20R, 20S (au moyen des bipasses de soufflage et de reprise correspondants) ;
- l'échangeur thermique de récupération 22 est activé pour refroidir l'air neuf en sortie de la roue dessicante 21 (dans la voie de soufflage 20S) et réchauffer l'air vicié entrant dans la voie de reprise 20R (air neuf sortant de l'humidificateur de reprise 25R lorsque présent), par un échange calorifique entre cet air neuf et cet air vicié ;
- la batterie chauffante de chauffage 24S est inactivé ;
- l'humidificateur de soufflage 25S procure un refroidissement de l'air neuf en sortie de l'échangeur thermique de récupération 22 et un ajustement du niveau d'humidité de l'air neuf soufflé dans la zone ZO ; et
- la batterie chauffante de régénération 24R est activée pour réchauffer l'air vicié sortant de l'échangeur thermique de récupération 22 (dans la voie de reprise 20R) pour une régénération de la roue dessicante 21.

Dans le mode de chauffage, l'unité de pilotage met en œuvre le pilotage suivant :
- la roue dessicante 21 est désactivée et/ou est bipassée sur les deux voies 20R, 20S (au moyen des bipasses de soufflage et de reprise correspondants) ;
- l'échangeur thermique enthalpique 26 est activé pour humidifier l'air neuf entrant dans la voie de soufflage 20S par récupération de l'humidité présente dans l'air vicié prélevé dans la zone ZO et sortant de l'échangeur thermique de récupération 22 et faire un premier étage de récupération thermique ;
- l'échangeur thermique de récupération 22 est activé pour réchauffer l'air neuf sortant de l'échangeur thermique enthalpique 26 (dans la voie de soufflage 20S) et refroidir l'air vicié entrant dans l'échangeur thermique enthalpique 26 et donc sortant de l'échangeur thermique de récupération 22 (dans la voie de reprise 20R) ;
- la batterie chauffante de chauffage 24S est activée ;
- la batterie chauffante de régénération 24R est inactivée ; et
- l'humidificateur de soufflage 25S procure une humidification de l'air neuf en sortie de l'échangeur thermique enthalpique 26 (dans la voie de soufflage 20S) si nécessaire.

## Revendications

1. Centrale de traitement d'air double flux (1) pour la régulation thermique et le renouvellement d'air d'au moins une zone (ZO) à traiter, ladite centrale de traitement d'air double flux (1) étant une centrale de traitement d'air à dessication qui comporte au moins :
- deux voies de circulation d'air entre la zone (ZO) et l'extérieur (EXT), comprenant une voie de reprise (20R) et une voie de soufflage (20S) ;
- un ventilateur de reprise (23R) placé sur la voie de reprise (20R) pour prélever un air vicié dans la zone (ZO) et le rejeter vers l'extérieur (EXT) ;
- un ventilateur de soufflage (23S) placé sur la voie de soufflage (20S) pour aspirer un air neuf à l'extérieur (EXT) et le souffler dans la zone (ZO) ;
- une roue dessicante (21) interposée sur les deux voies de circulation d'air (20R, 20S) ;
- un échangeur thermique de récupération (22) interposé sur les deux voies de circulation d'air (20R, 20S) et procurant un échange calorifique entre l'air vicié prélevé dans la zone (ZO) et l'air neuf aspiré à l'extérieur (EXT) ;
- une batterie chauffante de régénération (24R) placée sur la voie de reprise (20R) en amont de la roue dessicante (21) et en aval de l'échangeur thermique de récupération (22), et procurant un chauffage de l'air vicié pour une régénération de la roue dessicante (21) ;
- un humidificateur de soufflage (25S) placé sur la voie de soufflage (20S) en aval de l'échangeur thermique de récupération (22) ;
- une batterie chauffante de chauffage (24S) placée sur la voie de soufflage (20S) en aval de l'échangeur thermique de récupération (22) ;
- un générateur thermique (3) en liaison avec la batterie chauffante de régénération (24R) et avec la batterie chauffante de chauffage (24S) ;
ladite centrale de traitement d'air double flux (1) étant **caractérisée en ce qu'**elle comprend en outre un échangeur thermique enthalpique (26) interposé sur les deux voies de circulation d'air (20R, 20S) entre la roue dessicante (21) et la batterie chauffante de régénération (24R), de sorte que la batterie chauffante de régénération (24R) et l'échangeur thermique de récupération (22) sont en amont de l'échangeur thermique enthalpique (26) sur la voie de reprise (20R), ledit échangeur thermique enthalpique (26) procurant un échange calorifique et d'humidité entre l'air vicié prélevé dans la zone (ZO) et l'air neuf soufflé dans la zone (ZO).

2. Centrale de traitement d'air double flux (1) selon la revendication 1, dans laquelle, dans un mode de rafraîchissement pour un abaissement de la température et/ou de l'humidité dans la zone (ZO) :
- la roue dessicante (21) est activée pour procurer une déshumidification et un chauffage de l'air neuf entrant dans la voie de soufflage (20S) et, en parallèle, une humidification et un refroidissement de l'air vicié sortant de la voie de reprise (20R) ;
- l'échangeur thermique enthalpique (26) est inactivé et/ou est bipassé sur les deux voies (20R, 20S) ;
- l'échangeur thermique de récupération (22) est activé pour refroidir l'air neuf en sortie de la roue dessicante (21) et réchauffer l'air vicié entrant dans la voie de reprise (20R) ;
- la batterie chauffante de chauffage (24S) est inactive ;
- l'humidificateur de soufflage (25S) procure un refroidissement de l'air neuf en sortie de l'échangeur thermique de récupération (22) et un ajustement du niveau d'humidité de l'air soufflé dans la zone (ZO) ;
- la batterie chauffante de régénération (24R) est activée pour réchauffer l'air vicié sortant de l'échangeur thermique de récupération (22) pour une régénération de la roue dessicante (21).

3. Centrale de traitement d'air double flux (1) selon l'une quelconque des revendications 1 et 2, dans laquelle, dans un mode de chauffage pour une augmentation de la température et/ou de l'humidité dans la zone (ZO) :
- la roue dessicante (21) est désactivée et/ou est bipassée sur les deux voies (20R, 20S) ;
- l'échangeur thermique enthalpique (26) est activé pour humidifier l'air neuf entrant dans la voie de soufflage (20S) par récupération de l'humidité présente dans l'air vicié prélevé dans la zone (ZO) ;
- l'échangeur thermique de récupération (22) est activé pour réchauffer l'air neuf sortant de l'échangeur thermique enthalpique (26) et refroidir l'air vicié entrant dans l'échangeur thermique enthalpique (26) ;
- la batterie chauffante de chauffage (24S) est activée ;
- la batterie chauffante de régénération (24R) est inactivée ; et
- l'humidificateur de soufflage (25S) procure une humidification de l'air neuf en sortie de l'échangeur thermique de récupération (22) si nécessaire.

4. Centrale de traitement d'air double flux (1) selon l'une quelconque des revendications 1 à 3, comprenant en outre un humidificateur de reprise (25R) placé sur la voie de reprise (20R) en amont de l'échangeur thermique de récupération (22).

5. Centrale de traitement d'air double flux (1) selon l'une quelconque des revendications 1 à 4, dans laquelle l'échangeur thermique enthalpique (26) est du type rotatif.

6. Centrale de traitement d'air double flux (1) selon l'une quelconque des revendications 1 à 5, dans laquelle la batterie chauffante de chauffage (24S) est placée sur la voie de soufflage (20S) en aval de l'échangeur thermique de récupération (22) et en amont de l'humidificateur de soufflage (25S).

7. Centrale de traitement d'air double flux (1) selon l'une quelconque des revendications 1 à 6, dans laquelle l'échangeur thermique de récupération (22) est choisi parmi une roue de récupération, un échangeur à courant croisé, un échangeur à contre-courant, et un échangeur à plaques à contre-courant.

8. Procédé de traitement d'air pour la régulation thermique et le renouvellement d'air d'au moins une zone (ZO) à traiter, ledit procédé consistant à piloter une centrale de traitement d'air double flux (1) conforme à l'une quelconque des revendications 1 à 7 selon au moins deux modes de fonctionnement :
(a) un mode de rafraîchissement pour un abaissement de la température et/ou de l'humidité dans la zone (ZO), dans lequel :
- la roue dessicante (21) est activée pour procurer une déshumidification et un chauffage de l'air neuf entrant dans la voie de soufflage (20S) et, en parallèle, une humidification et un refroidissement de l'air vicié sortant de la voie de reprise (20R) ;
- l'échangeur thermique enthalpique (26) est inactivé et/ou est bipassé sur les deux voies (20R, 20S) ;
- l'échangeur thermique de récupération (22) est activé pour refroidir l'air neuf en sortie de la roue dessicante (21) et réchauffer l'air vicié entrant dans la voie de reprise (20R) ;
- la batterie chauffante de chauffage (24S) est inactive ;
- l'humidificateur de soufflage (25S) procure un refroidissement de l'air neuf en sortie de l'échangeur thermique de récupération (22) et un ajustement du niveau d'humidité de l'air soufflé dans la zone (ZO) ;
- la batterie chauffante de régénération (24R) est activée pour réchauffer l'air vicié sortant de l'échangeur thermique de récupération (22) pour une régénération de la roue dessicante (21) ;
(b) un mode de chauffage pour une augmentation de la température et/ou de l'humidité dans la zone (ZO), dans lequel :
- la roue dessicante (21) est désactivée et/ou est bipassée sur les deux voies (20R, 20S) ;
- l'échangeur thermique enthalpique (26) est activé pour humidifier l'air neuf entrant dans la voie de soufflage (20S) par récupération de l'humidité présente dans l'air vicié prélevé dans la zone (ZO) ;
- l'échangeur thermique de récupération (22) est activé pour réchauffer l'air neuf sortant de l'échangeur thermique enthalpique (26) et refroidir l'air vicié entrant dans l'échangeur thermique enthalpique (26) ;
- la batterie chauffante de chauffage (24S) est activée ;
- la batterie chauffante de régénération (24R) est inactivée ; et
- l'humidificateur de soufflage (25S) procure une humidification de l'air neuf en sortie de l'échangeur thermique de récupération (22) si nécessaire.

9. Procédé de traitement d'air selon la revendication 8, mis en œuvre pour la régulation thermique et le renouvellement d'air d'au moins une zone (ZO) de type bâtiment d'activité aquatique, tel qu'une piscine couverte.

## Patentansprüche

1. Lüftungsanlage mit doppeltem Luftstrom (1) zur thermischen Regulierung und Lufterneuerung mindestens einer zu behandelnden Zone (ZO), wobei die Lüftungsanlage mit doppeltem Luftstrom (1) eine Lüftungsanlage zur Trocknung ist, die mindestens aufweist:
- zwei Luftzirkulationswege zwischen der Zone (ZO) und dem Außenbereich (EXT), einen Abluftweg (20R) und einem Zuluftweg (20S) umfassend;
- einen Abluftventilator (23R), der am Abluftweg (20R) angeordnet ist, um verbrauchte Luft aus der Zone (ZO) zu entnehmen und sie zum Außenbereich (EXT) abzuführen;
- einen Zuluftventilator (23S), der am Zuluftweg (20S) angeordnet ist, um Frischluft vom Außenbereich (EXT) anzusaugen und in die Zone (ZO) zu blasen;
- einen Sorptionsrotor (21), der zwischen den beiden Luftzirkulationswegen (20R, 20S) positioniert ist;
- einen Rückgewinnungswärmetauscher (22), der zwischen den beiden Luftzirkulationswegen (20R, 20S) positioniert ist und für einen Wärmeaustausch zwischen der aus der Zone (ZO) entnommenen verbrauchten Luft und der vom Außenbereich (EXT) angesaugten Frischluft sorgt;
- ein Regenerationsheizregister (24R), das am Abluftweg (20R) stromaufwärts des Sorptionsrotors (21) und stromabwärts des Rückgewinnungswärmetauschers (22) angeordnet ist, und für eine Erwärmung der verbrauchten Luft zur Regeneration des Sorptionsrotors (21) sorgt;
- einen Zuluftbefeuchter (25S), der am Zuluftweg (20S) stromabwärts des Rückgewinnungswärmetauschers (22) angeordnet ist;
- ein Vorheizregister (24S), das am Zuluftweg (20S) stromabwärts des Rückgewinnungswärmetauschers (22) angeordnet ist;
- einen Wärmeerzeuger (3) in Verbindung mit dem Regenerationsheizregister (24R) und mit dem Vorheizregister (24S);
wobei die Lüftungsanlage mit doppeltem Luftstrom (1) **dadurch gekennzeichnet ist, dass** sie ferner einen Enthalpie-Wärmetauscher (26) umfasst, der an den zwei Luftzirkulationswegen (20R, 20S) zwischen dem Sorptionsrotor (21) und dem Regenerationsheizregister (24R) positioniert ist, so dass das Regenerationsheizregister (24R) und der Rückgewinnungswärmetauscher (22) stromaufwärts des Enthalpie-Wärmetauschers (26) am Abluftweg (20R) sind, wobei der Enthalpie-Wärmetauscher (26) für einen Wärme- und Feuchtigkeitsaustausch zwischen der aus der Zone (ZO) entnommenen verbrauchten Luft und der in die Zone (ZO) eingeblasenen Frischluft sorgt.

2. Lüftungsanlage mit doppeltem Luftstrom (1) nach Anspruch 1, wobei, in einem Kühlmodus zum Absenken der Temperatur und/oder der Feuchtigkeit in der Zone (ZO):
- der Sorptionsrotor (21) aktiviert wird, um für eine Entfeuchtung und Erwärmung der durch den Zuluftweg (20S) eintretenden Frischluft zu sorgen, und parallel dazu für eine Befeuchtung und Kühlung der verbrauchten Luft, die durch den Abluftweg (20R) austritt;
- der Enthalpie-Wärmetauscher (26) deaktiviert und/oder auf den beiden Wegen (20R, 20S) überbrückt wird;
- der Rückgewinnungswärmetauscher (22) aktiviert wird, um die Frischluft am Ausgang des Sorptionsrotors (21) zu kühlen und die in den Abluftweg (20R) eintretende verbrauchte Luft zu erwärmen;
- das Vorheizregister (24S) inaktiv ist;
- der Zuluftbefeuchter (25S) für eine Kühlung der Frischluft am Ausgang des Rückgewinnungswärmetauschers (22) sorgt und für eine Feineinstellung des Feuchtigkeitsniveaus der in die Zone (ZO) geblasenen Luft;
- das Regenerationsheizregister (24R) aktiviert wird, um die verbrauchte Luft zu erwärmen, die aus dem Rückgewinnungswärmetauscher (22) austritt, für eine Regeneration des Sorptionsrotors (21).

3. Lüftungsanlage mit doppeltem Luftstrom (1) nach einem der Ansprüche 1 und 2, wobei, in einem Heizmodus zur Erhöhung der Temperatur und/oder der Feuchtigkeit in der Zone (ZO):
- der Sorptionsrotor (21) deaktiviert und/oder auf den beiden Wegen (20R, 20S) überbrückt wird;
- der Enthalpie-Wärmetauscher (26) aktiviert wird, um die in den Zuluftweg (20S) eintretende Frischluft zu befeuchten, indem die in der aus der Zone (ZO) entnommenen verbrauchten Luft vorhandene Feuchtigkeit zurückgewonnen wird;
- der Rückgewinnungswärmetauscher (22) aktiviert wird, um die Frischluft zu erwärmen, die aus dem Enthalpie-Wärmetauscher (26) austritt, und die verbrauchte Luft zu kühlen, die in den Enthalpie-Wärmetauscher (26) eintritt;
- das Vorheizregister (24S) aktiviert wird;
- das Regenerationsheizregister (24R) deaktiviert wird; und
- der Zuluftbefeuchter (25S) bei Bedarf für eine Befeuchtung der Frischluft am Ausgang des Rückgewinnungswärmetauschers (22) sorgt.

4. Lüftungsanlage mit doppeltem Luftstrom (1) nach einem der Ansprüche 1 bis 3, die ferner einen Abluftbefeuchter (25R) umfasst, der am Abluftweg (20R) stromaufwärts des Rückgewinnungswärmetauschers (22) angeordnet ist.

5. Lüftungsanlage mit doppeltem Luftstrom (1) nach einem der Ansprüche 1 bis 4, wobei der Enthalpie-Wärmetauscher (26) vom Rotationstyp ist.

6. Lüftungsanlage mit doppeltem Luftstrom (1) nach einem der Ansprüche 1 bis 5, wobei das Vorheizregister (24S) am Zuluftweg (20S) stromabwärts des Rückgewinnungswärmetauschers (22) und stromaufwärts des Zuluftbefeuchters (25S) angeordnet ist.

7. Lüftungsanlage mit doppeltem Luftstrom (1) nach einem der Ansprüche 1 bis 6, wobei der Rückgewinnungswärmetauscher (22) ausgewählt wird aus einem Rückgewinnungsrotor, einem Kreuzstromwärmetauscher, einem Gegenstromwärmetauscher und einem Gegenstrom-Plattenwärmetauscher.

8. Lüftungsverfahren zur thermischen Regulierung und Lufterneuerung mindestens einer zu behandelnden Zone (ZO), wobei das Verfahren darin besteht, eine Lüftungsanlage mit doppeltem Luftstrom (1) gemäß einem der Ansprüche 1 bis 7 auf mindestens zwei Betriebsarten zu steuern:
(a) ein Kühlmodus zum Absenken der Temperatur und/oder Feuchtigkeit in der Zone (ZO), wobei:
- der Sorptionsrotor (21) aktiviert wird, um für eine Entfeuchtung und Erwärmung der durch den Zuluftweg (20S) eintretenden Frischluft zu sorgen, und parallel dazu für eine Befeuchtung und Kühlung der verbrauchten Luft, die durch den Abluftweg (20R) austritt;
- der Enthalpie-Wärmetauscher (26) deaktiviert und/oder auf den beiden Wegen (20R, 20S) überbrückt wird;
- der Rückgewinnungswärmetauscher (22) aktiviert wird, um die Frischluft am Ausgang des Sorptionsrotors (21) zu kühlen und die in den Abluftweg (20R) eintretende verbrauchte Luft zu erwärmen;
- das Vorheizregister (24S) inaktiv ist;
- der Zuluftbefeuchter (25S) für eine Kühlung der Frischluft am Ausgang des Rückgewinnungswärmetauschers (22) sorgt und für eine Feineinstellung des Feuchtigkeitsniveaus der in die Zone (ZO) geblasenen Luft;
- das Regenerationsheizregister (24R) aktiviert wird, um die verbrauchte Luft zu erwärmen, die aus dem Rückgewinnungswärmetauscher (22) austritt, für eine Regeneration des Sorptionsrotors (21);
(b) ein Heizmodus zur Erhöhung der Temperatur und/oder der Feuchtigkeit in der Zone (ZO), wobei:
- der Sorptionsrotor (21) deaktiviert und/oder auf den beiden Wegen (20R, 20S) überbrückt wird;
- der Enthalpie-Wärmetauscher (26) aktiviert wird, um die in den Zuluftweg (20S) eintretende Frischluft zu befeuchten, indem die in der aus der Zone (ZO) entnommenen verbrauchten Luft vorhandene Feuchtigkeit zurückgewonnen wird;
- der Rückgewinnungswärmetauscher (22) aktiviert wird, um die Frischluft zu erwärmen, die aus dem Enthalpie-Wärmetauscher (26) austritt, und die verbrauchte Luft zu kühlen, die in den Enthalpie-Wärmetauscher (26) eintritt;
- das Vorheizregister (24S) aktiviert wird;
- das Regenerationsheizregister (24R) deaktiviert wird; und
- der Zuluftbefeuchter (25S) bei Bedarf für eine Befeuchtung der Frischluft am Ausgang des Rückgewinnungswärmetauschers (22) sorgt.

9. Lüftungsverfahren nach Anspruch 8, realisiert zur thermischen Regulierung und Lufterneuerung mindestens einer Zone (ZO) vom Gebäudetyp Freizeitbad, zum Beispiel eines Hallenbades.

## Claims

1. A double-flow air processing unit (1) for thermal regulation and air renewal of at least one zone (ZO) to be treated, said double-flow air processing unit (1) being a dessication air processing unit which includes at least:
- two air flow paths between the zone (ZO) and the outside (EXT), comprising a return path (20R) and a blowing path (20S);
- a return fan (23R) placed on the return path (20R) to extract stale air from the zone (ZO) and rejecti it to the outside (EXT);
- a blowing fan (23S) placed on the blowing path (20S) to draw in fresh air from the outside (EXT) and blow it into the zone (ZO);
- a desiccant wheel (21) interposed on the two air flow paths (20R, 20S);
- a recovery heat exchanger (22) interposed on the two air flow paths (20R, 20S) and providing a heat exchange between the stale air drawn from the zone (ZO) and the fresh air drawn in from the exterior (EXT);
- a regeneration heating battery (24R) placed on the return path (20R) upstream of the desiccant wheel (21) and downstream of the recovery heat exchanger (22), and providing heating of the stale air for regeneration of the desiccant wheel (21);
- a blowing humidifier (25S) placed on the blowing path (20S) downstream of the recovery heat exchanger (22);
- a heater heating battery (24S) placed on the blowing path (20S) downstream of the recovery heat exchanger (22);
- a thermal generator (3) connected to the regeneration heating battery (24R) and to the heater heating battery (24S);
said double-flow air processing unit (1) being **characterized in that** it further comprises an enthalpy heat exchanger (26) interposed on the two air flow paths (20R, 20S) between the desiccant wheel (21) and the regeneration heating battery (24R), so that the regeneration heating battery (24R) and the recovery heat exchanger (22) are upstream of the enthalpy heat exchanger (26) on the return path (20R), said enthalpy heat exchanger (26) providing heat and humidity exchange between the stale air drawn from the zone (ZO) and the fresh air blown into the zone (ZO).

2. The double-flow air processing unit (1) according to claim 1, wherein, in a refresh mode for lowering the temperature and/or humidity in the zone (ZO):
- the desiccant wheel (21) is activated to provide dehumidification and heating of the fresh air entering the blowing path (20S) and, in parallel, humidification and cooling of the stale air leaving the return path (20R);
- the enthalpy heat exchanger (26) is inactivated and/or is bypassed on the two paths (20R, 20S);
- the recovery heat exchanger (22) is activated to cool the fresh air at the outlet of the desiccant wheel (21) and heat the stale air entering the return path (20R);
- the heater heating battery (24S) is inactive;
- the blowing humidifier (25S) provides cooling of the fresh air at the outlet of the recovery heat exchanger (22) and adjustment of the humidity level of the air blown into the zone (ZO);
- the regeneration heating battery (24R) is activated to heat the stale air leaving the recovery heat exchanger (22) for regeneration of the desiccant wheel (21).

3. The double-flow air processing unit (1) according to any one of claims 1 and 2, wherein, in a heating mode for increasing the temperature and/or humidity in the zone (ZO):
- the desiccant wheel (21) is deactivated and/or is bypassed on the two paths (20R, 20S);
- the enthalpy heat exchanger (26) is activated to humidify the fresh air entering the blowing path (20S) by recovering the humidity present in the stale air drawn from the zone (ZO);
- the recovery heat exchanger (22) is activated to heat the fresh air leaving the enthalpy heat exchanger (26) and cool the stale air entering the enthalpy heat exchanger (26);
- the heater heating battery (24S) is activated;
- the regeneration heating battery (24R) is inactivated; and
- the blowing humidifier (25S) provides humidification of the fresh air at the outlet of the recovery heat exchanger (22) where necessary.

4. The double-flow air processing unit (1) according to any one of claims 1 to 3, further comprising a return humidifier (25R) placed on the return path (20R) upstream of the recovery heat exchanger (22).

5. The double-flow air processing unit (1) according to any one of claims 1 to 4, wherein the enthalpy heat exchanger (26) is of the rotary type.

6. The double-flow air processing unit (1) according to any one of claims 1 to 5, wherein the heater heating battery (24S) is placed on the blowing path (20S) downstream of the recovery heat exchanger (22) and upstream of the blowing humidifier (25S).

7. The double-flow air processing unit (1) according to any one of claims 1 to 6, wherein the recovery heat exchanger (22) is selected from a recovery wheel, a cross-flow exchanger, a counter-flow exchanger, and a counter-flow plate exchanger.

8. An air processing method for thermal regulation and air renewal of at least one zone (ZO) to be treated, said method consisting in controlling a double-flow air processing unit (1) in accordance with any one of claims 1 to 7 according to at least two operating modes:
(a) a refresh mode for lowering the temperature and/or humidity in the zone (ZO), wherein:
- the desiccant wheel (21) is activated to provide dehumidification and heating of the fresh air entering the blowing path (20S) and, in parallel, humidification and cooling of the stale air leaving the return path (20R);
- the enthalpy heat exchanger (26) is inactivated and/or is bypassed on the two paths (20R, 20S);
- the recovery heat exchanger (22) is activated to cool the fresh air at the outlet of the desiccant wheel (21) and heat the stale air entering the return path (20R);
- the heater heating battery (24S) is inactive;
- the blowing humidifier (25S) provides cooling of the fresh air at the outlet of the recovery heat exchanger (22) and adjustment of the humidity level of the air blown into the zone (ZO);
- the regeneration heating battery (24R) is activated to heat the stale air leaving the recovery heat exchanger (22) for regeneration of the desiccant wheel (21);
(b) a heating mode for increasing the temperature and/or humidity in the zone (ZO), wherein:
- the desiccant wheel (21) is deactivated and/or is bypassed on the two paths (20R, 20S);
- the enthalpy heat exchanger (26) is activated to humidify the fresh air entering the blowing path (20S) by recovering the humidity present in the stale air drawn from the zone (ZO);
- the recovery heat exchanger (22) is activated to heat the fresh air leaving the enthalpy heat exchanger (26) and cool the stale air entering the enthalpy heat exchanger (26);
- the heater heating battery (24S) is activated;
- the regeneration heating battery (24R) is inactivated; and
- the blowing humidifier (25S) provides humidification of the fresh air at the outlet of the recovery heat exchanger (22) where necessary.

9. The air processing method according to claim 8, implemented for thermal regulation and air renewal of at least one zone (ZO) of the aquatic activity building type, such as an indoor swimming pool.
